# EUROPÄISCHE PATENTSCHRIFT

(11) **EP 3 664 914 B1**
(45) Veröffentlichungstag und Bekanntmachung des Hinweises auf die Patenterteilung: **24.07.2024**
(21) Anmeldenummer: 18752136.4
(22) Anmeldetag: 06.08.2018
(51) Int. Cl.: B01D 46/00, B60H 3/06

(54) **VERBINDUNGSANORDNUNG ZUR FESTLEGUNG EINES DECKELS EINER LUFTFILTEREINRICHTUNG EINES KRAFTWAGENS AN EINEM FILTERGEHÄUSE UND AN EINEM FILTERELEMENT SOWIE EIN ZUGEHÖRIGES FILTERELEMENT**
CONNECTING ASSEMBLY FOR FASTENING A COVER OF AN AIR FILTER DEVICE OF A MOTOR VEHICLE TO A FILTER HOUSING AND TO A FILTER ELEMENT, AND ASSOCIATED FILTER ELEMENT
DISPOSITIF DE RACCORDEMENT POUR LA FIXATION D'UN COUVERCLE D'UN DISPOSITIF DE FILTRE À AIR D'UN VÉHICULE AUTOMOBILE SUR UN BOÎTIER DE FILTRE ET SUR UN ÉLÉMENT FILTRANT AINSI QU'UN ÉLÉMENT FILTRANT ASSOCIÉ

(30) Priorität: 08.08.2017 DE 102017007497
(43) Veröffentlichungstag der Anmeldung: 17.06.2020
(73) Patentinhaber: Mercedes-Benz Group AG, 70372 Stuttgart (DE)
(72) Erfinder: SCHUMACHER, Eric, 70565 Stuttgart (DE)
(74) Vertreter: Novagraaf Group
(86) Internationale Anmeldenummer: PCT/EP2018/071235
(87) Internationale Veröffentlichungsnummer: WO 2019/030157

(56) Entgegenhaltungen:
- EP-A1- 1 306 120
- WO-A1-2007/003390
- DE-A1- 102006 024 587
- DE-A1- 102009 015 095
- DE-U1- 202008 010 474
- FR-A1- 2 815 699

## Beschreibung

Die Erfindung betrifft eine Verbindungsanordnung zur Festlegung eines Deckels einer Luftfiltereinrichtung eines Kraftwagens an einem Filtergehäuse und an einem austauschbar in dem Filtergehäuse angeordneten Filterelement, welches durch eine Einführöffnung in das Filtergehäuse einsetzbar ist, wobei die Einführöffnung durch den Deckel verschließbar ist, und wobei ein Halteelement am Filterelement angebracht ist, das mittels einer Kontaktfläche zur Kontaktierung mit einem vom Deckel abstehenden Verriegelungselement in einer Vertiefung am Filtergehäuse festlegbar ist. Des Weiteren betrifft die Erfindung ein Filterelement mit einem solchen Halteelement.

Die WO 2007/003390 A1 beschreibt einen Luftfilter für eine Belüftungseinrichtung eines Kraftfahrzeugs, der entlang eines Einschiebeschachtes in einen Luftkanal der Belüftungseinrichtung einschiebbar ist und einen Führungsrahmen aufweist. An dem Führungsrahmen sind Halteelemente angeordnet, welche den Luftfilter in eingeschobener Einbaulage entgegen der Einschieberichtung an einem Gehäuse des Luftkanals abstützen.

Die DE 10 2005 056 004 A1 beschreibt eine Filteranordnung für die Klimaanlage eines Kraftfahrzeugs mit einem Filtereinsatz, welcher einen Rahmen umfasst, wobei der Rahmen ein Falten aufweisendes Filtermaterial einfasst. Das Filtermaterial ist mit einem Deckel verbunden, welcher dem Verschließen einer Einschuböffnung dient, wenn der Filtereinsatz in eine die Einschuböffnung aufweisende Aufnahme eingeschoben wird. Ein Dichtelement zum Abdichten des Deckels gegenüber der Einschuböffnung ist als elastische, zu einer die Aufnahme begrenzenden Wandung hin vorstehende Dichtlippe ausgebildet.

Die DE 10 2015 004 645 A1 zeigt ein Filterelement zur Gasfiltration und eine Filtereinrichtung mit einem Filtergehäuse. An dem Filterelement ist ein Halteelement zum Festlegen in einer Vertiefung des aufnehmenden Filtergehäuses angeordnet, wobei das Halteelement an einem Griff zum Halten und Führen des Filterelements angeordnet ist. Der durch das Filtergehäuse für das Filterelement gebildete Aufnahmeraum der Filtereinrichtung wird mittels eines separaten Deckels verschlossen. Der Deckel weist an seiner dem Filterelement zugewandten Seite einen stabförmigen Vorsprung auf, der bei aufgesetztem Deckel durch eine Ausnehmung im Griff des Halteelements einragt und in Kontakt mit einer Kante der Ausnehmung kommt, wodurch das Halteelement in Vertiefung des Filtergehäuses gedrückt wird.

Aufgabe der vorliegenden Erfindung ist es, eine Verbindungsanordnung der eingangs genannten Art zu schaffen, durch die eine besonders zuverlässige Abdichtung des Filtergehäuses an der durch den Deckel verschließbaren Einführöffnung sowie ein sicherer Sitz des Deckels ermöglicht wird, sowie ein Filterelement, das die Herstellung einer solchen Verbindungsanordnung ermöglicht, bereitzustellen.

Diese Aufgabe wird durch eine Verbindungsanordnung mit den Merkmalen des Patentanspruchs 1 und durch ein Filterelement mit den Merkmalen des Patentanspruchs 2 gelöst. Vorteilhafte Ausgestaltungen mit zweckmäßigen Weiterbildungen der Erfindung sind in den abhängigen Patentansprüchen angegeben.

Die erfindungsgemäße Verbindungsanordnung zur Festlegung eines Deckels an einem Filtergehäuse einer Luftfiltereinrichtung eines Kraftwagens und - gleichzeitig damit - an einem Filterelement, wodurch eine im Filtergehäuse für das Filterelement vorgesehene Einführöffnung mit dem Deckel verschließbar ist, umfasst wenigstens ein Halteelement am Filterelement und ein Verriegelungselement am Deckel, wobei das Halteelement mittels einer Kontaktfläche zur Kontaktierung mit dem vom Deckel abragenden Verriegelungselement in einer Vertiefung des Filtergehäuses festlegbar ist, wobei das Halteelement erfindungsgemäß eine Rastgeometrie aufweist, mit der es in der als Rastnische ausgebildeten Vertiefung des Filtergehäuses einrastbar ist, wodurch das Filterelement in einer Rastposition am Filtergehäuse fixierbar ist, und das Verriegelungselement als Schaft mit wenigstens einer einenends vom Schaft abstehenden Riegelstrebe und andernends einem Griffteil zum Verdrehen des Verriegelungselements ausgebildet ist, wobei der Schaft durch den Deckel geführt ist, so dass der Deckel und das Filterelement in der Rastposition mittels der wenigstens einen Riegelstrebe und mittels wenigstens einer am Halteelement als Rampe ausgebildeten Kontaktfläche, die durch Drehung des Verriegelungselements miteinander in Anlage kommen, gegeneinander verspannbar sind.

Die Luftfiltereinrichtung kann insbesondere als Luftfilter einer Klimaanlage beziehungsweise Belüftungseinrichtung des Kraftwagens ausgebildet sein. Des Weiteren kann die Luftfiltereinrichtung auch für einen Ansaugtrakt eines Verbrennungsmotors des Kraftwagens vorgesehen sein.

Mit der erfindungsgemäßen Verbindungsanordnung kann die Einführöffnung eines Aufnahmeraums einer Luftfiltereinrichtung - kurz auch Luftfilter - zuverlässig gegen die Umgebung verschlossen und abgedichtet werden. Zugleich ist auch der Deckel sicher am Filtergehäuse - kurz Gehäuse - festgelegt. Der Zustand, in welchem der Deckel vermittels der Verbindungsanordnung die Einführöffnung verschließend und dichtend gegen das Filtergehäuse verspannt ist, wird im Weiteren als Betriebsstellung bezeichnet. Das wenigstens eine Halteelement weist eine Rastgeometrie beispielsweise in Form einer Rastnase auf, die in einer Vertiefung im Filtergehäuse, die als Rastnische ausgebildet ist, verrastbar ist, wodurch das Filterelement in einer Rastposition fixierbar ist. In der Rastposition ist das Filterelement so im Gehäuse platziert und fixiert, dass der Deckel befestigt werden kann, und zwar ohne, dass das Filterelement in Position gehalten werden muss. Diese Fixierung des Filterelements in einer selbsthaltenden Stellung ist besonders wichtig, wenn das Filterelement von einem Monteur "über Kopf" montiert werden muss, wenn also das Filterelement im Wesentlichen gegen die Schwerkraft beziehungsweise senkrecht nach oben in den Aufnahmeraum eingeschoben wird. Die Rastposition des Filterelements im Gehäuse ist gleichzeitig die Montageposition, also die Position, in welcher der Deckel mit dem Verriegelungselement montiert werden kann. Das Filterelement braucht nach der Fixierung in der Rastposition für die endgültige Befestigung beziehungsweise Montage nicht mehr händisch oder mittels einer anderweitigen Behelfsvorrichtung in dem Aufnahmeraum der Luftfiltereinrichtung gehalten zu werden. Dies erleichtert das Montieren des Deckels.

Der Deckel kann auch nur dann zum Verschließen der Einführöffnung des Aufnahmeraums an dem Gehäuse des Luftfilters festgelegt werden, wenn das wenigstens eine Halteelement beziehungsweise das Filterelement in die Rastposition bewegt ist. Damit wird zuverlässig verhindert, dass die Luftfiltereinrichtung ohne ein eingebautes Filterelement in Betrieb genommen werden kann. Die Verbindung der Elemente erfolgt durch Verspannung des Verriegelungselements innerhalb des Gehäuses durch die Riegelstrebe, die entlang der Rampe am Halteelement geführt wird; von außen bildet das Griffteil ein Widerlager gegen den Deckel, indem es in der Betriebsstellung direkt mit seiner dem Deckel zugewandten Unterseite - oder indirekt über ein Zwischenstück - in Abstützung gegen den Deckel gebracht wird.

Zur Erfindung gehört auch ein Filterelement mit wenigstens einem Halteelement einer Verbindungsanordnung nach Anspruch 1, wobei so wie bei der erfindungsgemäßen Verbindungsanordnung das wenigstens eine Halteelement an einem Rahmen, welcher ein Filtermaterial des Filterelements wenigstens bereichsweise umgibt, gehalten ist.

Das erfindungsgemäße Filterelement ist mit wenigstens einem Halteelement versehen, wie es zuvor, betreffend die erfindungsgemäße Verbindungsanordnung, beschrieben wurde. Erfindungsgemäß ist die Kontaktfläche an dem wenigstens einen Halteelement als wenigstens eine Rampe ausgebildet, vermittels welcher der Deckel durch eine Riegelstrebe, die an einem durch den Deckel geführten, und an einem Griffteil drehbaren Schaft des Verriegelungselements hervorsteht, dichtend an die Einführöffnung in eine Betriebsstellung heranziehbar ist, indem die Riegelstrebe entlang der Rampe geführt wird. Das Halteelement ist dabei an einem Rahmen, welcher das Filtermaterial des Filterelements wenigstens teilweise einfasst, befestigt.

Der Rahmen oder die Einfassung kann beispielsweise in Form mehrerer Wände gestaltet sein, die das Filtermaterial umgeben. Ist das Filterelement entlang der Einführrichtung in den Aufnahmeraum des Filtergehäuses eingesetzt worden, kann das wenigstens eine Haltelement, das sich am Rahmen beziehungsweise an einer Wand des Filterelements befindet, mit seiner Rastgeometrie in einer Richtung senkrecht - oder quer - zur Einschubrichtung des Filterelements in der Rastnische des Gehäuses aufgenommen, wodurch sich das Filterelement dann in einer selbstfixierenden Rastposition befindet. In der Rastposition dient das Halteelement dann - mittels seiner Rastgeometrie verstemmt gegen eine Sperrgeometrie des Gehäuses, gebildet durch die Rastnische - zum Festlegen des Verriegelungselements. Mittels des Verriegelungselements kann der Deckel zum Verschließen der Einführöffnung des Aufnahmeraums an dem Filtergehäuse festgelegt werden, wobei sich das Griffteil des Verriegelungselement in der Betriebsstellung der Verbindungsanordnung dann beispielweise direkt oder indirekt am Deckel abstützt.

In einer vorteilhaften Ausgestaltung des erfindungsgemäßen Filterelements ist die wenigstens eine Rampe an dem Halteelement als ein dreidimensionaler Buckel ausgeführt. Hierdurch ist es möglich am Verriegelungselement eine einwärts - also in Richtung des Griffteils des Verriegelungselements - gekrümmte oder gegen das Griffteil schräg zulaufende Riegelstrebe über die als korrespondierende Buckelgeometrie - beispielsweise als Ausschnitt aus einer Kugel- oder einer Kegelgeometrie - gestaltete Kontaktfläche beziehungsweise Rampe des Halteelements zu führen. Dadurch ist die Riegelstrebe in der Betriebsstellung an der Kontaktfläche nicht nur in Richtung der gegen den Deckel ausgeübten Zugkraft festgelegt, sondern sie ist zusätzlich noch in einer weiteren Richtung gesichert, was eine besondere Zuverlässigkeit gegen Erschütterungen bietet.

Die Erfindung sieht vor, dass das wenigstens eine Halteelement eine Durchtrittsöffnung zum Durchführen des Verriegelungselements aufweist, wobei die wenigstens eine Rampe auf der Rückseite der Durchtrittsöffnung ausgebildet ist. Diese Gestaltung ermöglicht es, dass das Elemente des Verriegelungselements - Griffelement, Schaft und Riegelstrebe - sowie die Kontaktfläche des Halteelements bezogen auf die in der Befestigungsstellung ausgeübte Kraft in nahezu gleicher Richtung zueinander zu liegen kommen. Damit ist eine besonders verwindungsarme Verbindung ermöglicht. Bei einer Ausführung des Halteelements mit zwei wendelförmigen punktsymmetrischen Rampen hinter der Durchtrittöffnung in Verbindung mit zwei in entgegengesetzter Richtung vom Schaft des Verriegelungselement abstehenden Riegelstreben kommen die Elemente des Verriegelungselements zusammen mit der Kontaktfläche des Halteelement bezüglich der Kraft sogar in gerader Richtung zu liegen. Dadurch ist ein Verkanten des Verriegelungselements am Deckel weitestgehend verhindert.

Gemäß einer weiteren zweckmäßigen Gestaltung weist das wenigstens eine Halteelement im Anschluss an die wenigstens eine Rampe einen Anschlag zur Endlagensicherung der Riegelstrebe auf. Damit kann die zumindest eine an dem Verriegelungselement ausgebildete Riegelstrebe durch Rotation des Schafts des Verriegelungselements mit dem Anschlag in Anlage gebracht werden, wodurch eine haptische Rückmeldung betreffend das Erreichen einer definierten Endlage der Befestigung an den Monteur erfolgt. Dadurch ist gewährleistet, dass der Deckel mit einer - durch die Höhe der Rampe - definierten Zugkraft in der Betriebstellung festgezogen ist. Auch ein Überdrehen des Verriegelungselements wird durch den Anschlag vermieden.

In einer weiteren vorteilhaften Ausgestaltung ist das wenigstens eine Halteelement mittels eines flexiblen Verbindungsstegs an dem Rahmen gehalten. Hierbei ist das wenigstens eine Halteelement durch ein elastisches Verformen des Verbindungsstegs sowohl in die Rastposition in der Rastnische des Filtergehäuses als auch umgekehrt aus der Rastposition wieder heraus in eine Demontageposition verbringbar. Durch die Flexibilität des Verbindungsstegs kann das Halteelement zuverlässig zwischen der einen und anderen Position hin- und her bewegt werden. Der Steg kann in seiner Flexibilität auch derart federnd ausgelegt sein, dass das daran befindliche Halteelement nach dem vollständigen Einschieben des Filterelements in das Filtergehäuse selbsttätig in die Rastnische einrastet.

In einer alternativen oder zusätzlichen Ausgestaltung kann der Rahmen des Filterelements eine elastische Frontwand aufweisen, die von einer ausgedehnten Form in eine zusammengedrückte Form verformbar ist. Die Frontwand ist dabei der Teil des Rahmens, welcher im eingesetzten Zustand des Filterelements der Einführöffnung zugewandt ist. Durch Verformung der Frontwand ist vorteilhaft das wenigstens eine Halteelement, das beispielweise an einer Seitenwand des Filterelements angebracht ist, bewegbar, auch wenn das Halteelement selbst unflexibel oder starr am Rahmen befestigt ist. Somit ist das Halteelement beziehungsweise dessen Rastgeometrie auch - oder alleine - durch Zusammendrücken oder Auseinanderziehen der flexiblen Frontwand sowohl in die Rastposition als auch umgekehrt aus der Rastposition wieder heraus in eine Demontageposition verbringbar.

Ein weiterer Vorteil der elastischen beziehungsweise verformbaren Frontwand des Filterelements besteht darin, dass ein Radius, an dem entlang die Rastgeometrie des Halteelements beim Ver- beziehungsweise Entrasten zu bewegen ist, im Vergleich zu einer Ausführung mit einem flexiblen Steg am Rahmen, sehr groß ist, da der Radius hierbei der Gesamtlänge einer Seitenwand entspricht. Dadurch wird der Kurvenverlauf zum Ver- beziehungsweise Entrasten der Rastgeometrie des Halteelements deutlich flacher, als bei einer Lösung mit kürzeren Stegen. Damit geht eine Vereinfachung der konstruktiven Anforderungen an die Herstellung der Rastnische auf Seiten des Gehäuses einher, deren Sperrgeometrie dann einen weniger spitzen Winkel aufweisen muss, um eine genaue Passung zwischen Rastnase und Rastnische, die für den sicheren Sitz des Filterelements in der fixierenden Raststellung entscheidend ist, zu gewährleisten. Es ist zwar denkbar, einen Steg an dem der Einführöffnung entgegengesetzten Ende einer Seitenwand anzusetzen und damit einen großen Bewegungsradius für das Halteelement beziehungsweise die Haltegeometrie zu erhalten, aber das wäre der Stabilität der Anordnung abträglich und würde die Konstruktion des Filtergehäuses an anderer Stelle verkomplizieren.

Gemäß einer bevorzugten Weiterbildung ist vorgesehen, dass das Filterelement wenigstens ein Betätigungselement aufweist, wobei durch Ausübung eines Drucks gegen das wenigstens eine Betätigungselement das wenigstens eine Halteelement aus der Rastposition in eine Demontageposition bewegbar ist. Beispielsweise kann das Betätigungselement als Griff-Lasche oder Griff-Plättchen an einer der Einschuböffung zugewandten Seite des Filterelements ausgebildet sein, wogegen mit einem Finger Druck ausgeübt werden kann, so dass das Halteelement beziehungsweise dessen Rastgeometrie einfach aus der Rastposition heraus bewegt werden kann. Das Betätigungselement kann beispielsweise direkt an der Frontwand des Filterelements oder auch am Halteelement befestigt sein.

Um das Filterelement aus dem Aufnahmeraum zu entnehmen ist das wenigstens eine Halteelement zunächst entgegen der Richtung, in die es sich zum Erreichen der Rastposition bewegt hat - aber wiederum im Wesentlichen senkrecht beziehungsweise quer zur Einführrichtung des Filterelements - in die Demontageposition zu bewegen. Solange das wenigstens eine Halteelement nicht in die Demontageposition bewegt ist, ist auch ein Entnehmen des Filterelements aus dem Aufnahmeraum verhindert. Ist das Halteelement beziehungsweise seine Rastgeometrie nicht mehr in Kontakt mit der Sperrgeometrie beziehungsweise Rastnische auf Seiten des Filtergehäuses, kann das Filterelement einfach aus dem Aufnahmeraum der Luftfiltereinrichtung entnommen werden.

Umgekehrt kann auch vorgesehen sein, dass durch Drücken gegen das wenigstens eine Betätigungselement das wenigstens eine Halteelement aus einer Zwischenstellung, welche das wenigstens eine Halteelement dann einnimmt, wenn das Filterelement in dem Aufnahmeraum eine Einbauposition erreicht hat, in die Rastposition bewegt werden kann. Beispielsweise kann hierfür das Halteelement quer beziehungsweise senkrecht zur Einschubrichtung des Filterelements in Richtung der Rastnische gedrückt werden. Dementsprechend wird dann, wenn das Filterelement aus dem Aufnahmeraum entnommen werden soll, das wenigstens eine Halteelement in die entgegengesetzte Richtung - in Richtung zum Filterelement - gedrückt, diesmal durch Drücken gegen das wenigstens eine Betätigungselement. Es kann also das wenigstens eine Betätigungselement als Rast- beziehungsweise Entrast-Lasche für das Fixieren des Filterelements und für das Demontieren des Filterelements dienen.

Die für die erfindungsgemäße Verbindungsanordnung beschriebenen Vorteile gelten auch für das erfindungsgemäße Filterelement und dessen beschriebenen Ausführungsformen wie auch umgekehrt.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:
- Fig. 1: perspektivisch ein Filterelement für einen Luftfilter einer Klimaanlage eines Kraftwagens, wobei an Seitenwänden eines Rahmens des Filterelements flexible Halteelemente angeordnet sind;
- Fig. 2: eine der Seitenwände des Rahmens mit dem Halteelement gemäß Fig. 1 in einer vergrößerten Detailansicht;
- Fig. 3: eine weitere perspektivische Detailansicht des Halteelements gemäß Fig. 2;
- Fig. 4: perspektivisch ein Gehäuse des Luftfilters, durch welches ein Aufnahmeraum für das Filterelement gemäß Fig. 1 bereitgestellt ist;
- Fig. 5: perspektivisch zwei Gehäusehälften, aus welchen das in Fig. 4 gezeigte Gehäuse aufgebaut ist;
- Fig. 6: in einer vergrößerten Detaildarstellung einen Teilbereich der unteren Gehäusehälfte des Gehäuses;
- Fig. 7: ein Deckel zum Verschließen des Aufnahmeraums für das Filterelement gemäß Fig. 1 in einer ersten Perspektivansicht;
- Fig. 8: der Deckel gemäß Fig. 7 in einer weiteren Perspektivansicht;
- Fig. 9: einen ersten Schritt beim Einführen des Filterelements gemäß Fig. 1 in das Filtergehäuse gemäß Fig. 4;
- Fig. 10: das Verformen eines Stegs, mittels welchem das Halteelement an der Seitenwand des Rahmens gehalten ist, beim weiteren Einführen des Filterelements in den Aufnahmeraum;
- Fig. 11: ein weiterer Schritt beim Einführen des Filterelements, bei dem das in den Aufnahmeraum eingebrachte Filterelement in Bezug auf die Einführtiefe seine Endlage erreicht hat;
- Fig. 12: das Aufbringen von Druck auf eine an dem Halteelement angeordnete Rastlasche, wodurch das Halteelement in eine Rastposition bewegt ist;
- Fig. 13: Schritte beim Befestigen des Deckels gemäß Fig. 7 an dem Filtergehäuse gemäß Fig. 4, wobei das Filterelement gem. Fig. 1 in das Gehäuse eingebracht ist;
- Fig. 14: eine Variante des Filterelements, bei welcher eine Frontwand des Rahmens elastisch verformbar ausgebildet ist, wobei das wenigstens eine Halteelement mit einem Tragelement verbunden ist, an welchem zwei federnde Arme angeordnet sind;
- Fig. 15: das Filterelement gemäß Fig. 14 im Bereich des Halteelements in einer vergrößerten Detailansicht;
- Fig. 16: eine weitere vergrößerte Detailansicht des Filterelements gemäß Fig. 14 im Bereich des Halteelements;
- Fig. 17: eine weitere Perspektivansicht des Halteelements gemäß Fig. 16;
- Fig. 18: ausschnittsweise die beiden Gehäusehälften des Gehäuses des Luftfilters, in welches das Filterelement gemäß Fig. 14 eingebracht werden kann;
- Fig. 19: ein Schnitt entlang einer Linie XIX-XIX in Fig. 18;
- Fig. 20: Schritte beim Einführen des Filterelements gemäß Fig. 14 in das Gehäuse gemäß Fig. 18 in einer Seitenansicht;
- Fig. 21: ausschnittsweise eine weitere Variante des Filterelements mit flexibler Frontwand;
- Fig. 22: das Herausbewegen eines der Halteelemente des Filterelements gemäß Fig. 21 aus der Rastposition durch Verformen der Frontwand;
- Fig. 23: in einer Perspektivansicht das Bewegen des Halteelements in die Demontageposition, in welcher das Filterelement gemäß Fig. 21 aus dem Aufnahmeraum des Gehäuses gemäß Fig. 18 entnommen werden kann;
- Fig. 24: eine weitere Ansicht des Filterelements gemäß Fig. 21 mit noch nicht verformter Frontwand;
- Fig. 25: das Zusammendrücken des Filterelements im Bereich der Frontwand und das hierdurch bewirkte Verbringen der Halteelemente in die Demontageposition;
- Fig. 26: ausschnittweise und perspektivisch eine weitere Variante des Filterelements, bei welcher das Halteelement am unteren Ende in der Mitte der Frontwand angebracht ist;
- Fig. 27: einen Ausschnitt des Filterelements gemäß Fig. 26 von schräg oben gesehen;
- Fig. 28: in einer Seitenansicht ein Verriegelungselement für diese Variante des Filterelements, sowie
- Fig. 29: eine ausschnittsweise, teilweise geschnittene Ansicht einer Verbindungsanordnung mit dem Filterelement gemäß Fig. 26, dem Verriegelungselement gemäß Fig. 28 und einem Filtergehäusedeckel..

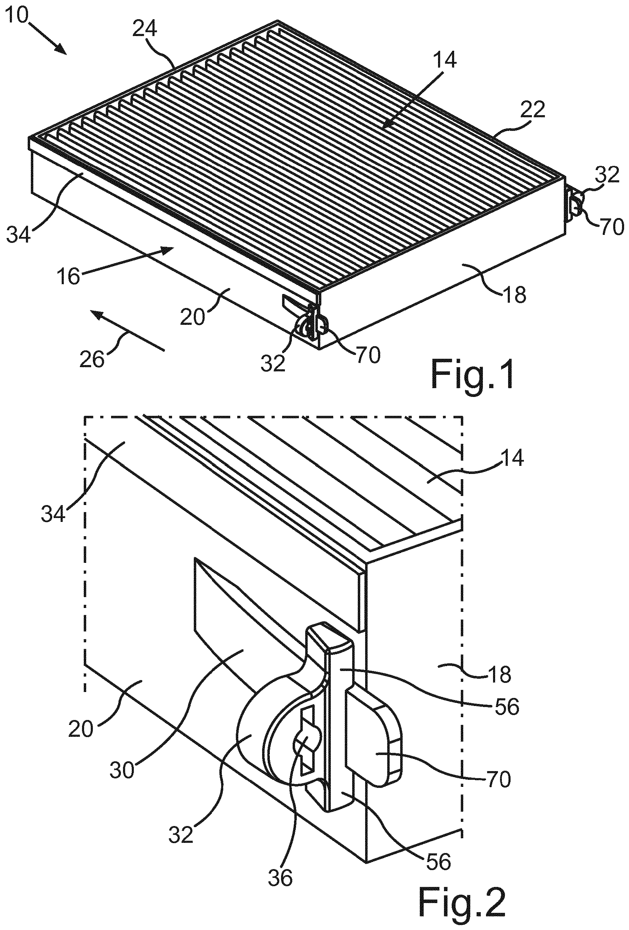

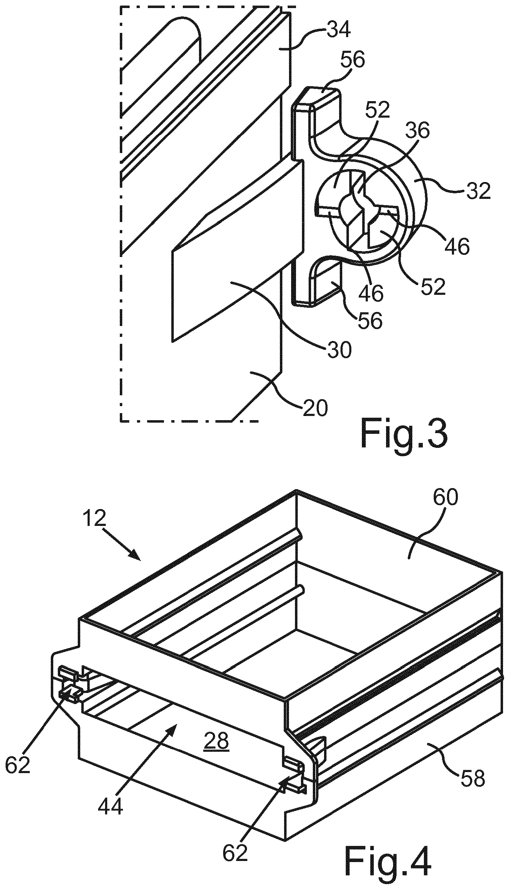

In Fig. 1 ist perspektivisch ein Filterelement 10 gezeigt, wie es zum Einbau in ein Gehäuse 12 (vergleiche Fig. 4) eines Luftfilters beispielsweise einer Klimaanlage eines Kraftwagens vorgesehen ist. Ein Filtermaterial 14 des Filterelements 10 ist vorliegend beispielhaft als Faltenfilter ausgebildet. Das Filtermaterial 14 ist von einem Rahmen 16 umfangsseitig umgeben, welcher eine vordere Frontwand 18, daran angrenzende Seitenwände 20, 22 und eine rückwärtige Stirnwand 24 umfasst.

Die Seitenwände 20, 22 erstrecken sich in eine Einführrichtung 26, welche in Fig. 1 durch einen Pfeil veranschaulicht ist. In diese Einführrichtung 26 kann das Filterelement 10 in einen Aufnahmeraum 28 eingebracht beziehungsweise eingeschoben werden, welcher durch das Filtergehäuse 12 bereitgestellt ist (vergleiche Fig. 4). Insbesondere in die Einführrichtung 26 betrachtet handelt es sich bei der in Fig. 1 dem Betrachter näheren Wand um die Frontwand 18 des Filterelement 10 und bei der dem Betrachter fernen Wand um die rückwärtige Stirnwand 24 des Filterelements 10.

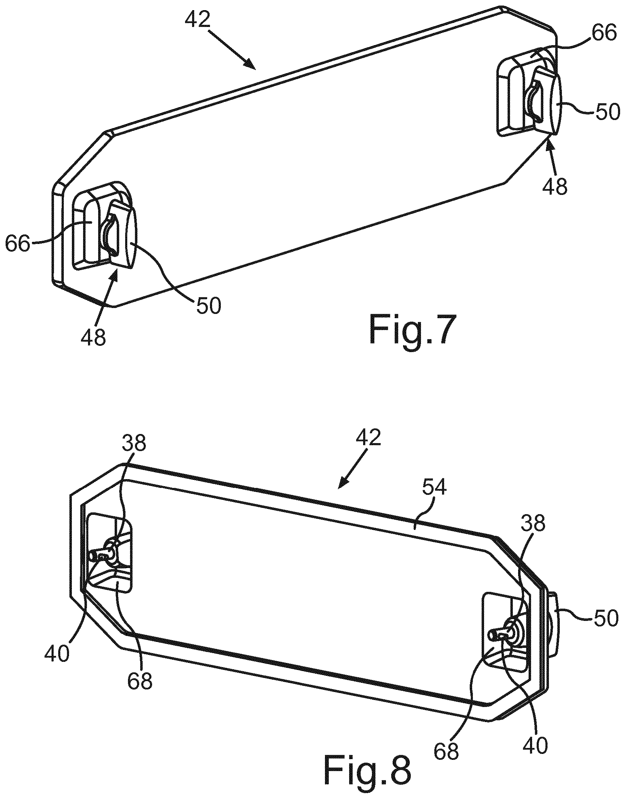

Bei der Variante des Filterelements 10 gemäß Fig. 1 ist mit der jeweiligen Seitenwand 20, 22 über einen flexiblen Steg 30 ein Halteelement 32 verbunden. Der flexible Steg 30 erstreckt sich im Wesentlichen entlang der jeweiligen Seitenwand 20, 22 hin zur Frontwand 18. Oberhalb des Stegs 30 ist an der jeweiligen Seitenwand 20, 22 sowie auch an der rückwärtigen Stirnwand 24 ein streifenförmiges Dichtelement 34 angeordnet. Aus Fig. 2 ist ersichtlich, dass das Halteelement 32 eine Durchtrittsöffnung 36 aufweist, in welche ein Schaft 38 mit an dem Schaft 38 angeordneten Riegelstreben 40 (vergleiche Fig. 8) eingeführt werden kann.

Dieser Schaft 38 mit den Riegelstreben 40 ist Bestandteil einer Verriegelungsanordnung, mittels welcher ein Deckel 42 (vergleiche Fig. 7 und Fig. 8) an dem Filtergehäuse 12 (vergleiche Fig. 4) befestigt werden kann. Mittels des Deckels 42 lässt sich eine Einführöffnung 44 des Aufnahmeraums 28 dichtend verschließen (vergleiche Fig. 4). Die beiden Riegelstreben 40 stehen senkrecht von dem Schaft 38 ab. Entsprechend weist die Durchtrittsöffnung 36 eine mit dem Querschnitt des Schafts 38 und den Riegelstreben 40 korrespondierende Geometrie auf.

Aus der rückwärtigen Ansicht auf das Halteelement 32 gemäß Fig. 3 ist ersichtlich, dass an dem Halteelement 32 jeweilige Anschläge 46 für die Riegelstreben 40 ausgebildet sind. Die Anschläge 46 ermöglichen eine definierte Betriebsstellung. Um die Riegelstreben 40 mit den Anschlägen 46 in Anlage zu bringen, werden Verriegelungselemente 48 ausgebildet sind, an einem Griffteil 50 gedreht, wie es in Fig. 7 in doppelter Ausführung gezeigt ist. Die hier abgebildeten Griffteile 50 weisen jeweils zwei Flügel auf.

Das Drehen am Griffteil 50 des Verriegelungselements 48 bewirkt das Drehen des Schafts 38 und zusammen mit diesem werden die Riegelstreben 40 um eine Längsachse des Schafts 38 entlang der Rampen 52 gedreht, welche an die Durchtrittsöffnung 36 angrenzend auf der Rückseite des Halteelements 32 ausgebildet sind, wodurch die Riegelstreben 40 gegen das Halteelement 32 und die Flügel des Griffteils 50 an ihrer Unterseite gegen den Deckel 42 verspannt werden. Dadurch dass die Riegelstreben 40 mit den Anschlägen 46 in Anlage kommen, erfolgt eine haptische Rückmeldung, dass der Verriegelungsvorgang abgeschlossen ist, beziehungsweise dass die Verriegelungsanordnung in der definierten Betriebsstellung ist.

Über die Höhe der Rampen 52 kann die Zugkraft, mit der der Deckel 42 gegen das Gehäuse 12 gezogen wird, eingestellt werden. Die Kraft gegen den Deckel 42 kann, aber muss nicht notwendig direkt durch das Griffteil 50 direkt erfolgen. Zwischen Deckel 42 und Griff 50 könnte, den Schaft umgebend oder umschließend, ein scheiben- oder muffenförmiges Zwischenstück oder dergleichen zur Abstützung gegen den Deckel 42 eingeschoben sein.

Durch die Rampen 52 ist eine Spanngeometrie bereitgestellt, um den Deckel 42 in dicht sitzende Anlage mit dem Filtergehäuse 12 zu bringen. Die Spanngeometrien der Halteelemente 32, welche einem Verschleiß unterliegen können, werden vorliegend zusammen mit dem Filterelement 10, also zusammen dem Tauschteil gewechselt.

Des Weiteren ist auf der Seite des Deckels 42, die dem Filtergehäuse 12 zugewandt ist, eine umlaufende, ebenfalls streifenförmige Dichtung 54 angeordnet (vergleiche Fig. 8). Das jeweilige Halteelement 32 weist des Weiteren eine einstückig mit diesem ausgebildete Rastgeometrie 56, hier in Form von Rastnasen, auf (vergleiche Fig. 2).

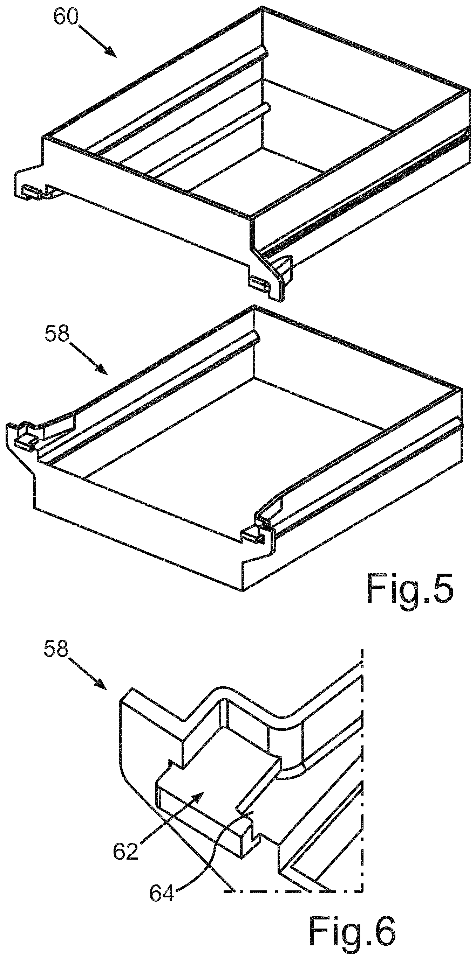

In Fig. 4 ist das aus einer unteren Gehäusehälfte beziehungsweise einem unteren Gehäuseteil 58 und einer oberen Gehäusehälfte beziehungsweise einem oberen Gehäuseteil 60 zusammengesetzte Gehäuse 12 gezeigt. In Fig. 5 sind das obere Gehäuseteil 60 und das untere Gehäuseteil 58 separat voneinander dargestellt. Durch die beiden Gehäuseteile 58, 60 sind im zusammengebauten Zustand der Gehäuseteile 58, 60 Aufnahmebereiche 62 für die Halteelemente 32 ausgebildet. In diesen Aufnahmebereichen 62 sind durch das obere Gehäuseteil 60 und das untere Gehäuseteil 58 jeweilige Rastnischen 64 oder auch Sperrgeometrien bereitgestellt, welche dem Aufnehmen beziehungsweise Verrasten der Rastgeometrien 56 beziehungsweise Rastnasen (vergleiche Fig. 2 und 3) dienen.

In Fig. 6 ist die durch das untere Gehäuseteil 58 gebildete Rastnische 64 in einer vergrößerten Perspektivansicht gezeigt. Die Rastnischen 64 dienen als Widerlager oder Sperre für die korrespondierenden Rastgeometrien 56 beziehungsweise Rastnasen auf Seiten des Filterelements 10, die in einer Rastposition des Filterelements 10 durch einen stegartigen Vorsprung der Rastnische 64 gehalten werden.

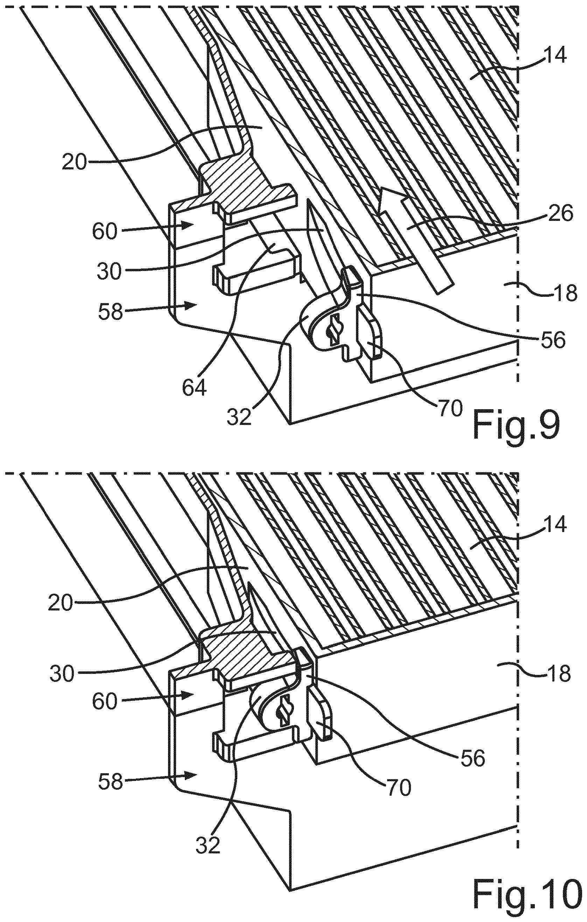

In Fig. 7 ist der Deckel 42 in einer ersten Perspektivansicht gezeigt. Im Bereich der Verriegelungselemente 48 weist der Deckel 42 Ausbuchtungen 66 auf. Mit diesen Ausbuchtungen 66 korrespondieren Hohlräume 68 beziehungsweise Aufnahmeräume, welche auf der Seite des Deckels 42 ausgebildet sind, welche bei montiertem Deckel 42 der Frontwand 18 des Filterelements 10 zugewandt ist. In diese Hohlräume 68 ragen Betätigungslaschen 70 (vergleiche Fig. 2) hinein, wenn der Deckel 42 an dem Gehäuse 12 befestigt ist und entsprechend mittels des Deckels 42 die Einführöffnung 44 (vergleiche Fig. 4) verschlossen ist. Mittels dieser Betätigungslaschen 70 lassen sich die Halteelemente 32 quer zur Einführrichtung 26, d.h. im Wesentlichen senkrecht zur Einführrichtung 26, hin- oder her bewegen. Die Betätigungslaschen 70 dienen somit der Befestigung und der Demontage des Filterelements 10. Dies wird mit Bezug auf Fig. 9 bis Fig. 12 näher beschrieben.

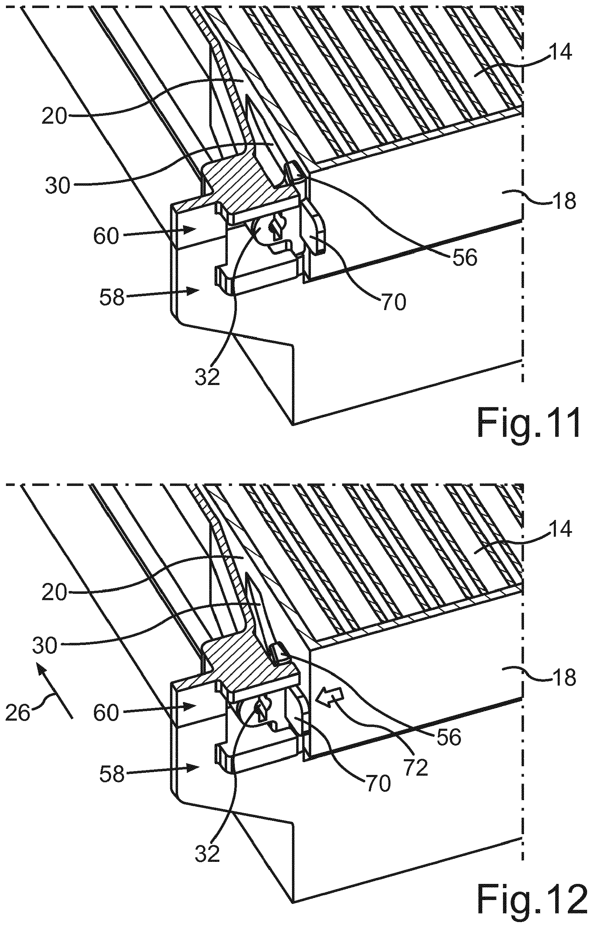

In Fig. 9 sind das Gehäuseteil 60 und das Filterelement 10 in einem Ausschnitt gezeigt. Zunächst wird das Filterelement 10 in das Gehäuse 12 in die Einführrichtung 26 eingeschoben. Wenn die hier keilförmigen Rastnasen oder Rastgeometrien 56 mit dem Rand des Filtergehäuses 12 in Anlage kommen, wird beim weiteren Einschieben des Filterelements 10 der flexible Steg 30, und mit diesem das Halteelement 32, näher zur Seitenwand 20 hin bewegt (vergleiche Fig. 10). In Fig. 11 ist das Filterelement 10 in seiner Einbaulage oder Endlage gezeigt, in welcher sich die Rastgeometrien 56 auf der Höhe der Rastnischen 64 befinden. Durch händischen Druck gegen die Betätigungslasche 70 nach außen, welches in Fig. 12 durch einen Pfeil 72 veranschaulicht ist, und/oder durch geeignete Vorspannung des flexiblen Stegs 30, werden die Rastnasen 56 hinterschnittig in die Rastnischen 64 eingebracht.
Das Einrasten der Rastnasen 56 in den Rastnischen 64 ist fühlbar und hörbar. Folglich erhält eine Bedienperson, welche das Halteelement 32 in die Rastposition bewegt, eine haptische und akustische Rückmeldung, dass das Halteelement 32 die Rastposition erreicht hat. Anschließend hat das Halteelement 32, welches als Aufnahme für den Schaft 38 des Verriegelungselements 48 dient, seine Rastposition erreicht, und die Spanngeometrie der Rampen 52 ist lagerichtig ausgerichtet, so dass das Verriegelungselement 48 durch die hier schlüssellochformige Durchtrittsöffnung 36 hindurchgeführt und der Deckel 42 montiert werden kann.

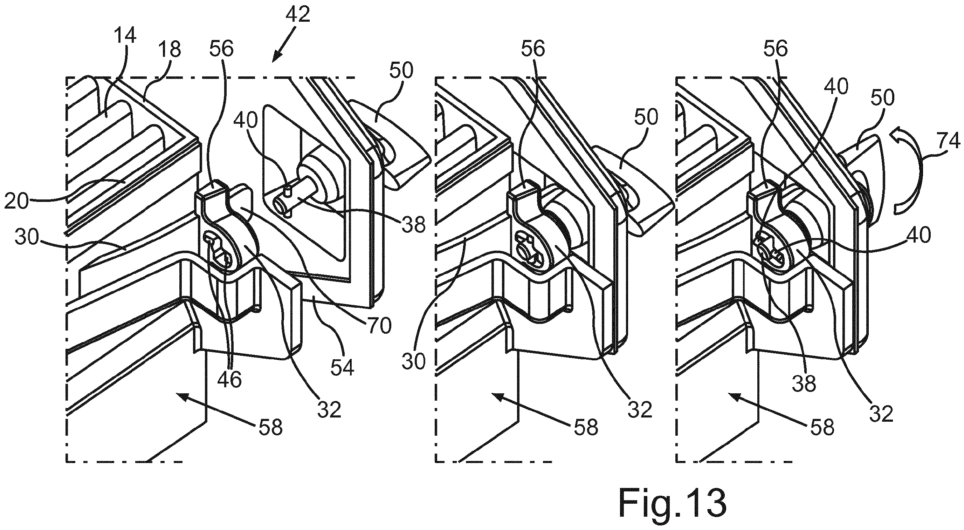

Mit Fig. 13 ist die Befestigung des Deckels 42 in einer Rückansicht gezeigt. Der gezeigte Ausschnitt entspricht dem der in Fig. 9 bis 12 Ausschnitt von Gehäuseteil 60 und Filterelement 10. Wenn das jeweilige Halteelement 32 in dem Aufnahmebereich 62 aufgenommen und somit in die Rastposition bewegt ist (vergleiche linke Darstellung in Fig. 13), kann der Deckel 42 aufgesetzt werden. In der in Fig. 13 mittleren Darstellung ist gezeigt, wie die Riegelstreben 40 durch die Durchtrittsöffnung 36 hindurch geschoben wurden, sodass sich die Riegelstreben 40 auf der Höhe der Rampen 52 (vergleiche Fig. 3) befinden. Der Schaft 38 wird hierfür durch die Durchtrittsöffnung 36 hindurchgeführt.

Die Riegelstreben 40, hier in Form von Zapfen, die senkrecht vom Ende des Schafts 38 abstehen, und der Schaft 38 oder Bolzen des Verriegelungselements 48 passen sich in die durch das Halteelement 32 bereitgestellte Aufnahmegeometrie ein. Anschließend wird mittels des Griffteils 50 das Verriegelungselement 48 beziehungsweise der Schaft 38 mit den Riegelstreben 40 verdreht. Eine entsprechende Drehbewegung ist in der in Fig. 13 rechten Darstellung durch einen weiteren Pfeil 74 veranschaulicht. Durch das Betätigen des Verriegelungselements 48 wird der Deckel dichtsitzend gegen das Filtergehäuse gezogen, bis die Riegelstreben 40 an den Anschlägen 46 (vergleiche Fig. 3) des Halteelements 32 anliegen.

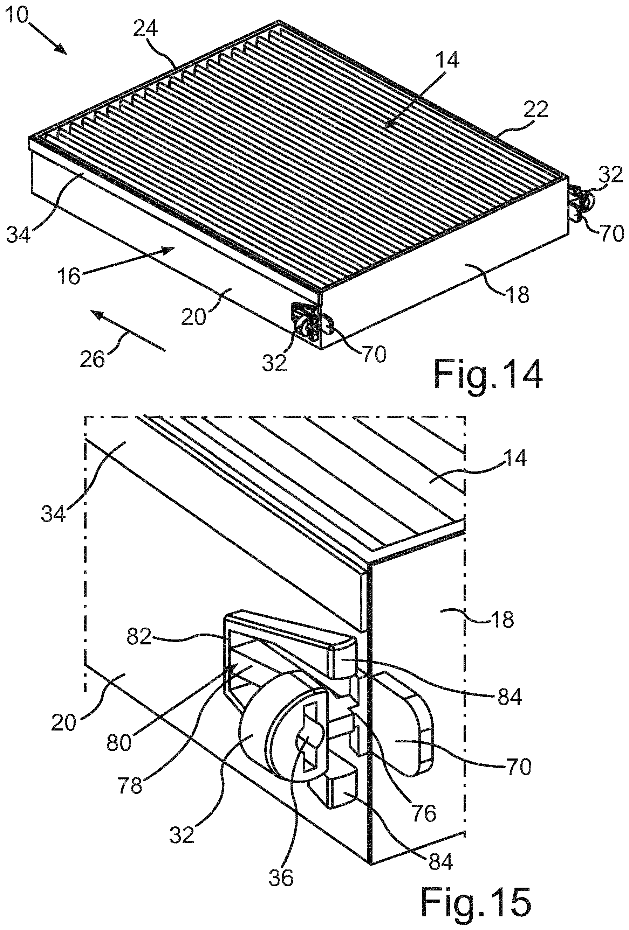

Fig. 14 zeigt eine Variante des Filterelements 10, bei welcher die Frontwand 18 des Rahmens 16 elastisch verformbar ausgebildet ist. Ansonsten entspricht der Rahmen 16 der mit Bezug auf Fig. 1 geschilderten Variante des Filterelements 10. Das Filterelement 10 weist auch die vorstehend beschriebenen Halteelemente 32 auf. Jedoch sind die Halteelemente 32 über einen starren Verbindungssteg 76 mit der jeweiligen, an die Frontwand 18 angrenzenden Seitenwand 20, 22 verbunden. Dieser Verbindungssteg 76 liegt hier in Fortsetzung der durch die Frontwand 18 gebildeten Ebene, oder in anderen Worten, er fluchtet mit der Frontwand 18.

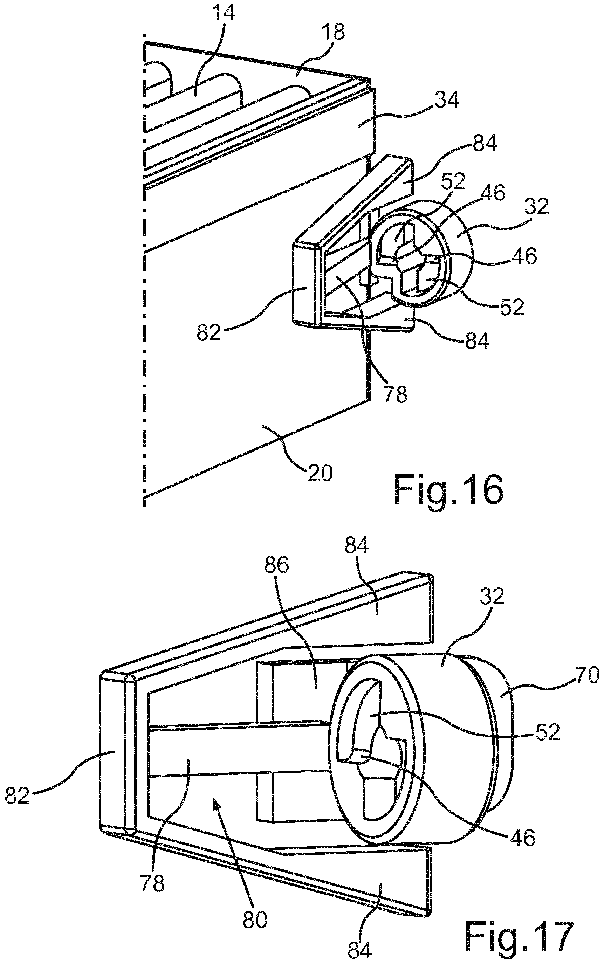

Von dem Halteelement 32, welches die Durchtrittsöffnungen 36 für den Schaft 38 mit den Riegelstreben 40 (vergleiche Fig. 8) aufweist, erstreckt sich eine erste Strebe 78 eines Tragelements 80 in die Einführrichtung 26 nach hinten. An einer zweiten Strebe 82 des T-förmigen Tragelements 80 sind zwei federnd ausgebildete Arme 84 angeordnet (vergleiche Fig. 5). Aus Fig. 16 ist ersichtlich, dass das Halteelement 32 wiederum die Anschläge 46 für die Riegelstreben 40 (vergleiche Fig. 8) und die Rampen 52 aufweist. Die Anschläge 46 und die Rampen 52 des Halteelements 32 sind auch in der Darstellung in Fig. 17 gut zu erkennen, in welcher auch ein Anbindungsbereich 86 gezeigt ist, in welchem die Anbindung zu dem Rahmen 16 hergestellt ist.

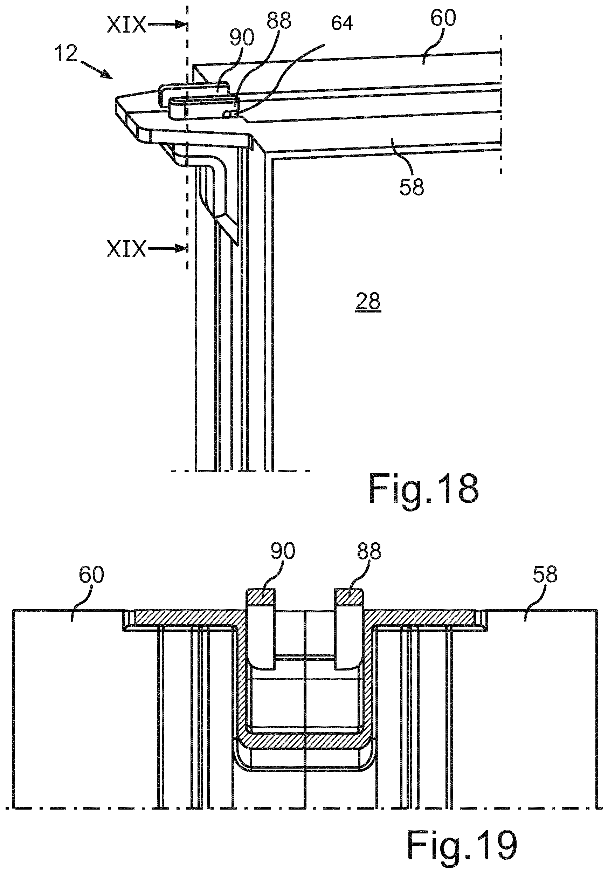

Auch die Halteelemente 32 des Filterelements 10 gemäß Fig. 15 weisen die Spanngeometrie der Verriegelungsanordnung auf. Bei dieser Variante des Filterelements 10 dienen die flexiblen Arme 84 Rastgeometrie für die in dem Filtergehäuse 12 bereitgestellten Rastnischen 64 (vergleiche Fig. 18). Insbesondere aus der Schnittansicht in Fig. 19 ist ersichtlich, wie durch stegartige Vorsprünge 88, 90, welche auf Seiten des Gehäuses vorgesehen sind, die Rastnischen 64 zur Verrastung mit den Armen 84 bereitgestellt sind.

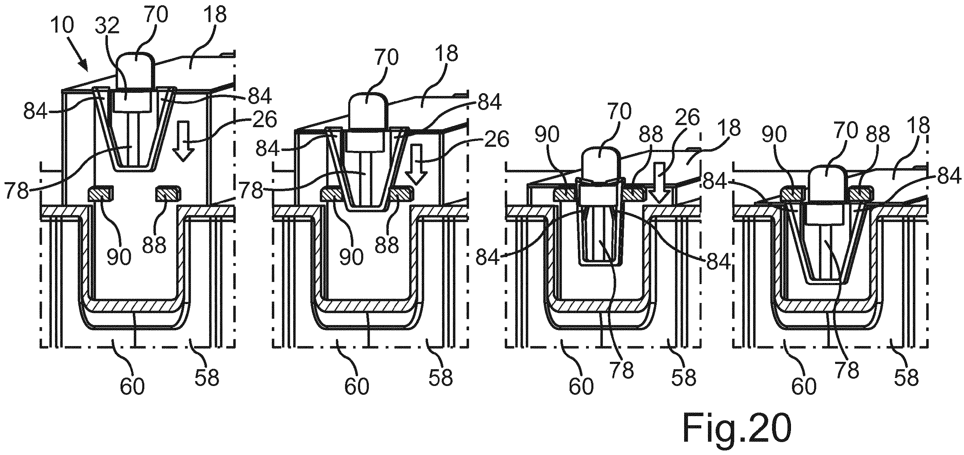

Die Fixierung des Filterelements gemäß Fig. 14 im Gehäuse 12 gemäß Fig. 18 soll anhand von Fig. 20 veranschaulicht werden. Zunächst wird das Filterelement 10 in das Gehäuse 12 eingeführt (vergleiche Fig. 20, linke Darstellung). Die flexiblen Arme 84 kommen mit den stegartigen Vorsprüngen 88, 90 am Gehäuse 12 - beziehnungsweise an den Gehäusehälften 58 und 60 - in Anlage und werden beim weiteren Einschieben in die Einführrichtung 26 in Richtung der ersten Strebe 78 des Tragelements 80 bewegt (vergleiche Fig. 20, zweite Darstellung von links). Die flexiblen Arme 84 verformen sich dabei elastisch an den Stegen 88, 90 (vergleiche Fig. 20, zweite Darstellung von rechts). Wenn das Filterelement 10 seine Endlage erreicht hat, springen die Arme 84 - nun hinter den Stegen 88, 90 - zurück in ihre Ausgangsstellung (vergleiche Fig. 20, rechte Darstellung). Die Rastgeometrien in Form der Arme 84 sperren jetzt die Entnahme des Filterelements 10 aus dem Aufnahmeraum (vergleiche Fig. 18) entgegen der Einführrichtung 26.

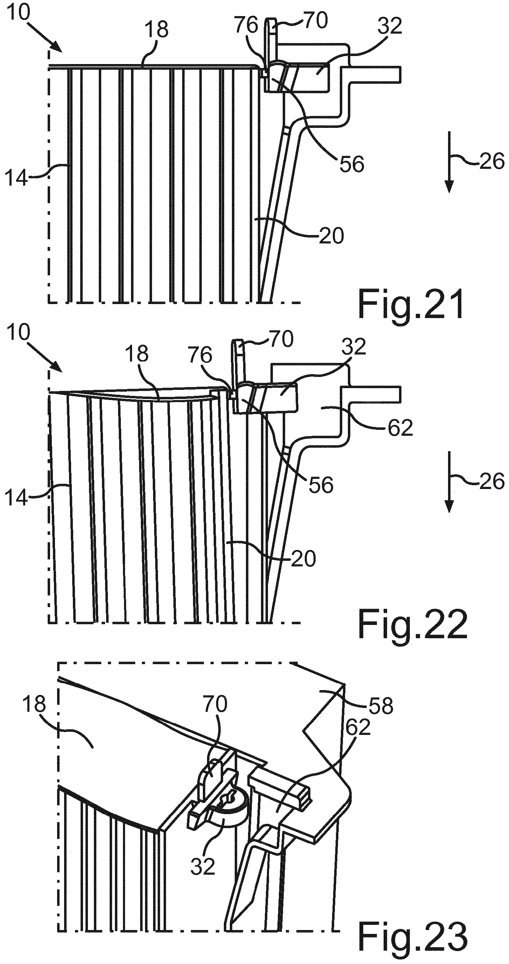

In Fig. 21 bis Fig. 23 ist eine weitere Variante des Filterelements 10 gezeigt, wobei mit fortschreitender Bildfolge die Demontage veranschaulicht wird. Die Art und Weise der Demontage entspricht dabei auch der Demontage eines Filterelements 10, wie es gemäß Fig. 14 dargestellt ist. Sowohl bei der in Fig. 14 gezeigten Variante des Filterelements 10 als auch bei der Variante des Filterelements 10 gemäß Fig. 21 erfolgt das Hin- und Her-bewegen der Halteelemente 32 von der Rastposition in die Demontageposition - wie auch umgekehrt - mittels einer elastisch verformbaren beziehungsweise flexiblen Frontwand 18.

Bei dem in Fig. 21 gezeigten Filterelement 10 sind anstelle der federnden Arme 84 wiederum starre Rastnasen als Rastgeometrien 56 vorgesehen, welche das Filterelement 10 in seiner Endposition gegen ein Entnehmen aus dem Aufnahmeraum 28 sperren. Jedoch sind die Halteelemente 32 nicht mittels des flexiblen Stegs 30 an der jeweiligen Seitenwand 20 befestigt, sondern über einen steifen Verbindungssteg 76, welcher auch mit Bezug auf Fig. 14 und Fig. 15 beschrieben worden ist. In Fig. 21 befindet sich das Halteelement 32 in der Rastposition, in welcher das Verriegelungselement 48 (vergleiche Fig. 7 und Fig. 8) an dem Halteelement 32 befestigt werden kann.

Durch Ausüben eines Drucks gegen die Betätigungslasche 70 quer zu der Einführrichtung 26, und in Richtung auf das Filterelement 10 einwärts, gibt die flexible Frontwand 18 nach, wodurch das Halteelement 32 aus dem Aufnahmebereich 62, welcher auf Seiten des Gehäuses 12 bereitgestellt ist (vergleiche Fig. 4), herausbewegt werden kann. Insbesondere aus Fig. 23 ist ersichtlich, dass durch Ausübung des Drucks gegen die Betätigungslasche 70 auf das Filterelement 10 einwärts die Frontwand 18 so weit verformt werden kann, dass das Filterelement 10 aus dem Aufnahmeraum 28 entgegen der Einführrichtung 26 entnommen werden kann.

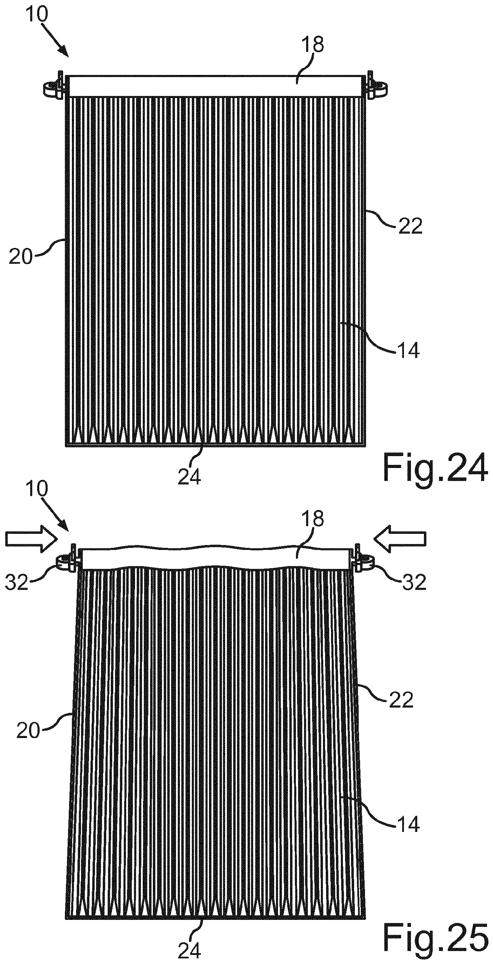

Fig. 24 zeigt die Variante des Filterelements 10 gemäß Fig. 21 mit zwei Halteelementen 32 zu beiden Seiten der Frontwand 18 und mit der noch unverformten Frontwand 18. In Fig. 25 veranschaulichen Pfeile 92 das Zusammendrücken des Filterelements 10 im Bereich der elastisch verformbaren Frontwand 18, durch welches die Halteelemente 32 aus den Aufnahmebereichen 62 herausbewegt werden. Die Demontageposition wird also durch Zusammendrücken oder Aufeinander-zu-Bewegen der Betätigungslaschen 70 der flexiblen Frontwand 18 des Filterelements 10 erreicht. Insbeondere durch eine steife oder starre Anbindung der Halteelemente 32 an die Seitenwand 20, 22 lässt sich die zur Verformung der Frontwand aufzubringende Kraft besonders gut einleiten.

Anhand von Fig. 25 ist auch besonders gut zu erkennen, dass ein Radius, an dem entlang die Rastgeometrie 56 beim Ver- beziehungsweise Entrasten bewegt wird, bei einer Ausführung des Filterelements 10 mit flexibler Frontwand - im Vergleich zur Ausführung mit den flexiblen Stegen gemäß Fig. 3 - sehr groß ist, indem die Radiuslänge der Gesamtlänge der Seitenwand 20, 22 entspricht. Dadurch kann der Kurvenverlauf der Sperrgeometrie der Rastnische 64 auf Seiten des Gehäuses 12 der zum Ein- beziehungsweise Entrasten der Rastgeometrien 56 nötig ist (vgl. Fig. 6, die Einbuchtung des stegartigen Vorsprungs der Rastnische 64), flacher ausgeführt werden, als bei der Lösung mit den kürzeren flexiblen Stegen 30. Damit geht eine Vereinfachung der konstruktiven Anforderungen an die Herstellung der Rastnischen 64, 88, 90 auf Seiten des Gehäuses einher.

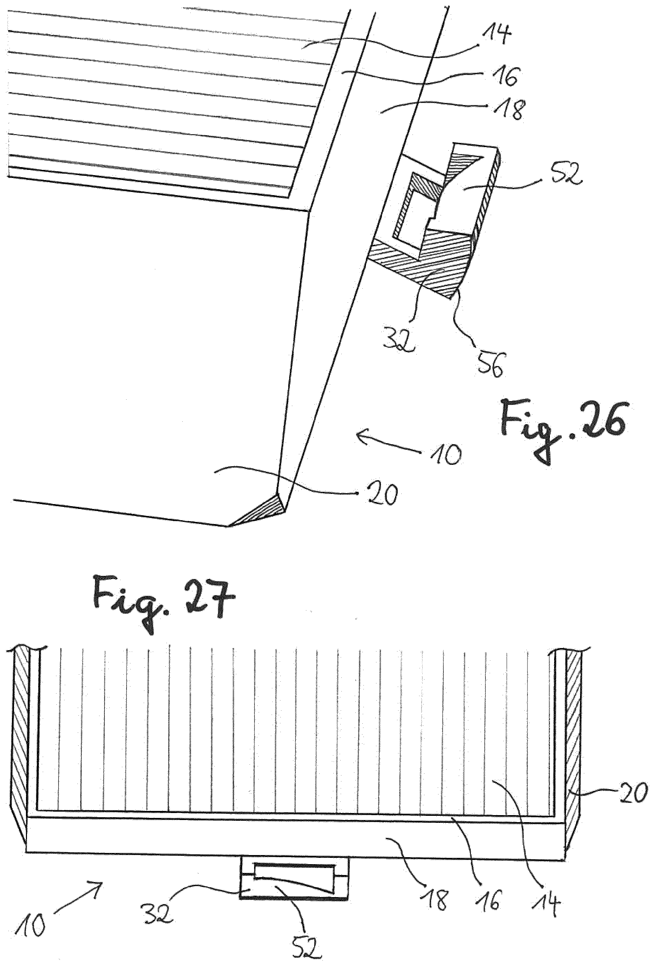

Fig. 26 bis Fig. 29 veranschaulichen eine weitere Ausführungsform des erfindungsgemäßen Filterelements 10 beziehungsweise der erfindungsgemäßen Verbindungsanordnung. Fig. 26 zeigt das Haltelement 32 mittig an der Unterkante der Frontwand 18 des Filterelements 10 angebracht. Das Halteelement 32 hat eine winkelförmige Gestalt, wobei die nach unten weisende Fläche beziehungsweise der untere Abschnitt des Halteelements als Rastgeometrie 56 für eine Rastnische im Gehäuse 12 fungiert. Das Filterelement 10 wird mit dieser Rastgeometrie 56 in dem Gehäuse 12 fixiert.

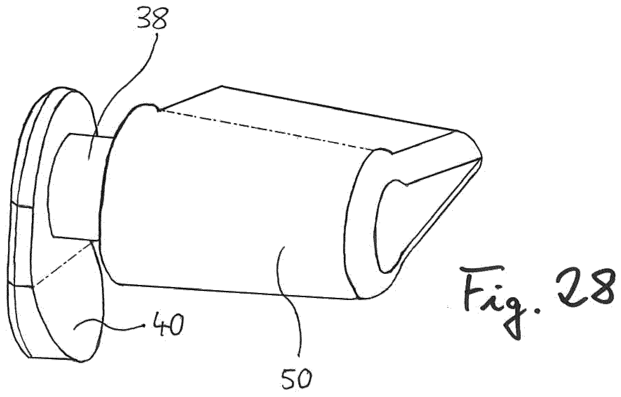

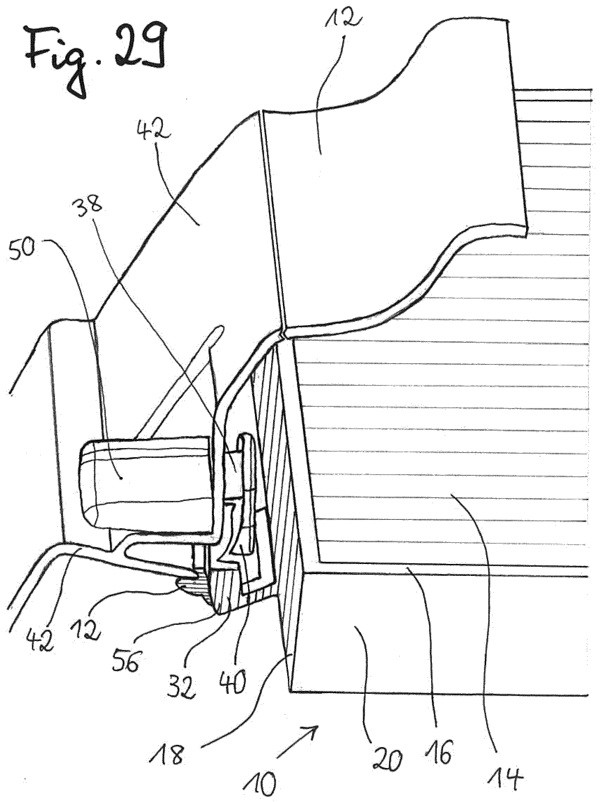

Wie in den Figuren 26 und 27 zu sehen, weist das Halteelement 32 eine Rampe 52 als Kontaktfläche für die Riegelstrebe 40 des Verriegelungselements 48 auf. Die Riegelstrebe 40, hier in Form einer Zunge, kann wie in den Figuren 28 und 29 dargestellt, an ihrem freien Ende einwärts - in Richtung Schaft - geneigt verlaufen. Damit wird im Zusammenspiel mit einer korrespondierenden Gegengeometrie der Rampe 52 am Haltelement 32, die dann buckelförmig oder auch kegelstumpfförmig gestaltet ist, erreicht, dass die Riegelstrebe 40 in der Betriebsstellung nicht nur in Zugrichtung gegen den Deckel gesichert ist, sondern auch in einer dazu geneigten Richtung, wodurch die Verbindung zusätzlich, beispielsweise gegen Erschütterungen, gesichert wird.

Fig. 29 zeigt das Verriegelungselement 48 in einem Zustand zwischen einer Ent- und Verriegelungsstellung. Zur vollständigen Verriegelung muss die Riegelstrebe 40 - oder hier Riegelzunge - mittels des Griffteils 50 im Uhrzeigersinn über die Rampe 52 geführt werden. Der Abstand zwischen der Unterseite der Riegelzunge 40 und der Rampe 52 ist hier der Übersichtlichkeit halber vergrößert dargestellt. Aus dem gleichen Grund ist das Ineinandergreifen von Deckel 42 und Gehäuse 12 im oberen Teil der Figur nur schematisch dargestellt.

## Patentansprüche

1. Verbindungsanordnung zur Festlegung eines Deckels (42) einer Luftfiltereinrichtung eines Kraftwagens an einem Filtergehäuse (12) und an einem austauschbar in dem Filtergehäuse angeordneten Filterelement (10), welches durch eine Einführöffnung in das Filtergehäuse einsetzbar ist, wobei die Einführöffnung (44) durch den Deckel (42) verschließbar ist, wobei der Deckel (42) am Filtergehäuse (12) und am Filterelement (10) festgelegt ist, wobei wenigstens ein Halteelement (32) am Filterelement (10) mittels einer Kontaktfläche zur Kontaktierung mit einem vom Deckel (42) abragenden Verriegelungselement (48) in einer Vertiefung des Filtergehäuses (12) festlegbar ist,
**dadurch gekennzeichnet, dass**
das Halteelement (32) eine Rastgeometrie (56) aufweist, mit der es in der als Rastnische (64) ausgebildeten Vertiefung des Filtergehäuses (12) einrastbar ist, wodurch das Filterelement (10) in einer Rastposition am Filtergehäuse (12) fixierbar ist, und das Verriegelungselement (48) als Schaft (38) mit wenigstens einer einenends vom Schaft abstehenden Riegelstrebe (40) und andernends einem Griffteil (50) zum Verdrehen des Verriegelungselements (48) ausgebildet ist, wobei der Schaft (38) durch den Deckel (42) geführt ist, so dass der Deckel (42) und das Filterelement in der Rastposition mittels der wenigstens einen Riegelstrebe (40) und mittels wenigstens einer am Halteelement (32) als Rampe (52) ausgebildeten Kontaktfläche, die durch Drehung des Verriegelungselements (48) miteinander in Anlage kommen, gegeneinander verspannbar sind, wobei der Deckel (42) nur dann zum Verschließen der Einführöffnung (44) des Aufnahmeraums an dem Filtergehäuse (12) der Luftfiltereinrichtung festgelegt werden kann, wenn das wenigstens eine Halteelement (32) in die Rastposition bewegt ist, wobei das wenigstens eine Halteelement (32) an einem Rahmen (16), welcher ein Filtermaterial (14) des Filterelements (10) wenigstens bereichsweise umgibt, gehalten ist, wobei das wenigstens eine Halteelement (32) eine Durchtrittsöffnung (36) zum Durchführen des Verriegelungselements (48) aufweist, und wobei die wenigstens eine Rampe (52) auf der Rückseite der Durchtrittsöffnung (36) ausgebildet ist.

2. Filterelement mit wenigstens einem Halteelement (32) zur Herstellung einer Verbindungsanordnung nach Anspruch 1, wobei das wenigstens eine Halteelement (32) an einem Rahmen (16), welcher ein Filtermaterial (14) des Filterelements (10) wenigstens bereichsweise umgibt, gehalten ist, und wobei das wenigstens eine Halteelement (32) eine Durchtrittsöffnung (36) zum Durchführen des Verriegelungselements (48) aufweist, wobei die wenigstens eine Rampe (52) auf der Rückseite der Durchtrittsöffnung (36) ausgebildet ist.

3. Filterelement nach Anspruch 2,
**dadurch gekennzeichnet, dass**
die wenigstens eine Rampe (52) an dem Halteelement (32) als dreidimensionaler Buckel ausgebildet ist.

4. Filterelement nach einem der Ansprüche 2 bis 3,
**dadurch gekennzeichnet, dass**
das wenigstens eine Halteelement (32), an die wenigstens eine Rampe (52) anschließend, einen Anschlag (46) zur Endlagensicherung der wenigstens einen Riegelstrebe (40) aufweist.

5. Filterelement nach einem der Ansprüche 2 bis 4,
**dadurch gekennzeichnet, dass**
das wenigstens eine Halteelement (32) mittels eines flexiblen Verbindungsstegs (30) an dem Rahmen (16) gehalten ist.

6. Filterelement nach einem der Ansprüche 2 bis 5,
**dadurch gekennzeichnet, dass**
das Filterelement (10) eine elastische Frontwand (18) aufweist, die von einer ausgedehnten Form in eine zusammengedrückte Form verformbar ist.

7. Filterelement nach einem der Ansprüche 2 bis 6,
**dadurch gekennzeichnet, dass**
das Filterelement (10) wenigstens ein Betätigungselement (70) aufweist, durch das die Rastgeometrie (56) des wenigstens einen Halteelements (32) aus der Rastposition des Filterelements (10) in eine Demontageposition bewegbar ist.

## Claims

1. Connecting arrangement for securing a cover (42) of an air filter device of a motor vehicle to a filter housing (12) and to a filter element (10) which is arranged in an exchangeable manner in the filter housing and which can be inserted into the filter housing through an insertion opening, the insertion opening (44) being able to be closed by the cover (42), the cover (42) being secured to the filter housing (12) and to the filter element (10), at least one holding element (32) being able to be secured to the filter element (10) by means of a contact surface for contacting a locking element (48) protruding from the cover (42) in a recess in the filter housing (12),
**characterized in that**
the holding element (32) has a locking geometry (56) with which it can be locked into the recess of the filter housing (12) designed as a locking niche (64), as a result of which the filter element (10) can be fixed in a locking position on the filter housing (12), and the locking element (48) is designed as a shaft (38) having at least one strut bolt (40) protruding from the shaft at one end and a handle part (50) at the other end for rotating the locking element (48), the shaft (38) being guided through the cover (42) so that the cover (42) and the filter element can be braced against one another in the locking position by means of the at least one strut bolt (40) and by means of at least one contact surface designed as a ramp (52) on the holding element (32), which come into contact with one another by rotation of the locking element (48), the cover (42) being able to be secured to the filter housing (12) of the air filter device for closing the insertion opening (44) of the receiving chamber only when the at least one holding element (32) is moved into the locking position, the at least one holding element (32) being held on a frame (16) which at least partially surrounds a filter material (14) of the filter element (10), the at least one holding element (32) having a passage opening (36) for the passage of the locking element (48), and the at least one ramp (52) being formed on the rear side of the passage opening (36).

2. Filter element having at least one holding element (32) for producing a connecting arrangement according to claim 1, wherein the at least one holding element (32) is held on a frame (16) which at least partially surrounds a filter material (14) of the filter element (10), and wherein the at least one holding element (32) has a passage opening (36) for the passage of the locking element (48), wherein the at least one ramp (52) is formed on the rear side of the passage opening (36).

3. Filter element according to claim 2,
**characterized in that**
the at least one ramp (52) on the holding element (32) is designed as a three-dimensional hump.

4. Filter element according to either claim 2 or claim 3,
**characterized in that**
the at least one holding element (32), adjoining the at least one ramp (52), has a stop (46) for securing the end position of the at least one strut bolt (40).

5. Filter element according to any of claims 2 to 4,
**characterized in that**
the at least one holding element (32) is held on the frame (16) by means of a flexible connecting piece (30).

6. Filter element according to any of claims 2 to 5,
**characterized in that**
the filter element (10) has a resilient front wall (18) which is deformable from an expanded shape to a compressed shape.

7. Filter element according to any of claims 2 to 6,
**characterized in that**
the filter element (10) has at least one actuating element (70) by means of which the locking geometry (56) of the at least one holding element (32) can be moved from the locking position of the filter element (10) into a disassembly position.

## Revendications

1. Agencement de liaison pour la fixation d'un élément de recouvrement (42) d'un dispositif de filtre à air d'un véhicule automobile sur un boîtier de filtre (12) et sur un élément filtrant (10) disposé de manière interchangeable dans le boîtier de filtre, lequel élément filtrant peut être inséré dans le boîtier de filtre par une ouverture d'introduction, dans lequel l'ouverture d'introduction (44) peut être fermée par l'élément de recouvrement (42), dans lequel l'élément de recouvrement (42) est fixé au boîtier de filtre (12) et à l'élément filtrant (10), dans lequel au moins un élément de maintien (32) sur l'élément filtrant (10) peut être fixé dans un renfoncement du boîtier de filtre (12) au moyen d'une surface de contact pour entrer en contact avec un élément de verrouillage (48) dépassant de l'élément de recouvrement (42),
**caractérisé en ce que**
l'élément de maintien (32) présente une géométrie d'encliquetage (56) avec laquelle il peut être encliqueté dans le renfoncement du boîtier de filtre (12) réalisé sous forme de niche d'encliquetage (64), moyennant quoi l'élément filtrant (10) peut être fixé dans une position d'encliquetage sur le boîtier de filtre (12), et l'élément de verrouillage (48) est réalisé sous forme de tige (38) comportant au moins une entretoise de verrouillage (40) faisant saillie depuis la tige à une extrémité et une partie de préhension (50) à l'autre extrémité pour faire tourner l'élément de verrouillage (48), dans lequel la tige (38) est guidée à travers l'élément de recouvrement (42), de sorte que l'élément de recouvrement (42) et l'élément filtrant peuvent être serrés l'un contre l'autre dans la position d'encliquetage au moyen de l'au moins une entretoise de verrouillage (40) et au moyen d'au moins une surface de contact réalisée sous forme de rampe (52) sur l'élément de maintien (32), lesquelles viennent en appui l'une contre l'autre par la rotation de l'élément de verrouillage (48), dans lequel l'élément de recouvrement (42) peut être fixé sur le boîtier de filtre (12) du dispositif de filtre à air pour la fermeture de l'ouverture d'introduction (44) de l'espace de réception uniquement lorsque l'au moins un élément de maintien (32) est déplacé dans la position d'encliquetage, dans lequel l'au moins un élément de maintien (32) est maintenu sur un cadre (16) qui entoure au moins dans certaines zones un matériau filtrant (14) de l'élément filtrant (10), dans lequel l'au moins un élément de maintien (32) présente une ouverture de passage (36) pour le passage de l'élément de verrouillage (48), et dans lequel l'au moins une rampe (52) est réalisée sur le côté arrière de l'ouverture de passage (36).

2. Élément filtrant comportant au moins un élément de maintien (32) pour la fabrication d'un agencement de liaison selon la revendication 1, dans lequel l'au moins un élément de maintien (32) est maintenu sur un cadre (16) qui entoure au moins dans certaines zones un matériau filtrant (14) de l'élément filtrant (10), et dans lequel l'au moins un élément de maintien (32) présente une ouverture de passage (36) pour le passage de l'élément de verrouillage (48), dans lequel l'au moins une rampe (52) est réalisée sur le côté arrière de l'ouverture de passage (36).

3. Élément filtrant selon la revendication 2,
**caractérisé en ce que**
l'au moins une rampe (52) est réalisée sur l'élément de maintien (32) sous forme d'une bosse tridimensionnelle.

4. Élément filtrant selon l'une des revendications 2 à 3,
**caractérisé en ce que**
l'au moins un élément de maintien (32), se raccordant à l'au moins une rampe (52), présente une butée (46) pour le blocage en fin de course de l'au moins une entretoise de verrouillage (40).

5. Élément filtrant selon l'une des revendications 2 à 4,
**caractérisé en ce que**
l'au moins un élément de maintien (32) est maintenu sur le cadre (16) au moyen d'une barre de liaison flexible (30).

6. Élément filtrant selon l'une des revendications 2 à 5,
**caractérisé en ce que**
l'élément filtrant (10) présente une paroi frontale élastique (18) qui est déformable d'une forme étendue à une forme comprimée.

7. Élément filtrant selon l'une des revendications 2 à 6,
**caractérisé en ce que**
l'élément filtrant (10) présente au moins un élément d'actionnement (70) par lequel la géométrie d'encliquetage (56) de l'au moins un élément de maintien (32) peut être déplacée de la position d'encliquetage de l'élément filtrant (10) dans une position de démontage.
